Europäisches Patentamt

European Patent Office

Office européen des brevets

(11) Veröffentlichungsnummer : **0 438 640 B1**

(12)

# EUROPÄISCHE PATENTSCHRIFT

(45) Veröffentlichungstag der Patentschrift :
**03.03.93 Patentblatt 93/09**

(51) Int. Cl.$^5$ : **F02D 41/28, F02D 41/20**

(21) Anmeldenummer : **90119298.9**

(22) Anmeldetag : **09.10.90**

(54) **Verfahren zur Bewegungs- und Lagezustandserkennung eines durch magnetische Wechselwirkung zwischen einer Ruhelage und einer Endlage beweglichen Bauteiles eines induktiven elektrischen Verbrauchers.**

(30) Priorität : **23.12.89 DE 3942836**

(43) Veröffentlichungstag der Anmeldung :
**31.07.91 Patentblatt 91/31**

(45) Bekanntmachung des Hinweises auf die Patenterteilung :
**03.03.93 Patentblatt 93/09**

(84) Benannte Vertragsstaaten :
**FR GB IT SE**

(56) Entgegenhaltungen :
**EP-A- 0 195 267**
**DE-A- 3 817 770**

(56) Entgegenhaltungen :
**US-A- 4 612 597**
**PATENT ABSTRACTS OF JAPAN, Band 10, Nr. 187 (M-493)[2243], 2. Juli 1986; & JP-A-61 31 642 (JAPAN ELECTRONIC CONTROL) 14-02-1986**

(73) Patentinhaber : **DAIMLER-BENZ AKTIENGESELLSCHAFT**
**Mercedesstrasse 136**
**W-7000 Stuttgart 60 (DE)**

(72) Erfinder : **Thelen, Ulrich**
**Mülbergerstrasse 149**
**W-7300 Esslingen (DE)**
Erfinder : **Hirth, Thomas**
**Nauenerstrasse 17a**
**W-7000 Stuttgart 70 (DE)**

## Beschreibung

Die Erfindung betrifft ein Verfahren zur Bewegungs- und Lagezustandserkennung eines durch magnetische Wechselwirkung zwischen einer Ruhelage und einer Endlage beweglichen Bauteiles eines induktiven elektrischen Verbrauchers gemäß dem Oberbegriff des Patentanspruches 1.

Aus der DE 38 17 770 A1 ist bereits ein gattungsgemäßes Verfahren bekannt, wonach der Ansteuerstrom eines Schaltventiles in seinem zeitlichen Verlauf untersucht wird, um erkennen zu können, wann der Anker des Schaltventiles in Bewegung ist. Dabei erfolgt eine logische Verknüpfung des Ansteuersignales zum Schaltventil mit der Zeitableitung des Ansteuerstromes derart, daß erkannt werden kann, wann der Anker des Schaltventiles in Bewegung ist. Wird dort bei einer Bestromung des Schaltventils erkannt, daß sich der Anker des Schaltventiles in Bewegung gesetzt hat, erfolgt eine Reduzierung des Ansteuerstromes, so daß in dem Schaltventil nur eine geringere Leistung umgesetzt werden muß. Außerdem wird durch eine Bestimmung der Flugzeiten des Ankers des Schaltventiles eine Fehlerdiagnose durchgeführt.

Bei diesem Verfahren könnte unter Umständen als nachteilug erachtet werden, daß im Rahmen der Fehlerdiagnose nur die Flugzeiten des Ankers des Schaltventiles berücksichtigt werden, ohne daß auf Betriebsbedingungen des Schaltventiles wie beispielsweise die Betriebstemperatur oder die Bordnetzspannung eingegangen wird. Bei einer niedrigeren Betriebstemperatur wird die Flugzeit verlängert, ohne daß eine Funktionsstörung des Schaltventiles vorliegt. Außerdem erfolgt die Reduzierung des Erregerstromes ohne eine Berücksichtigung von Betriebsbedingungen. Des weiteren muß bei der Bestimmung der Zeitableitung zweckmäßigerweise eine Filterung des Signales erfolgen, so daß eine Veränderung der Größe des Erregerstromes frühestens mit einer zeitlichen Verzögerung erfolgen kann, die der Filterzeitkonstanten entspricht.

Des weiteren ist aus dem Gebiet der Fehlerdiagnose bereits allgemein ein Verfahren bekannt, wonach Fehler bzw. Zustände von an einem Prozeß beteiligten Bauteilen erkannt werden, indem das Verhalten des Prozesses charakterisierende Größen erfaßt werden. Diese das Verhalten des Prozesses charakterisierenden Größen werden durch den Prozeß beschreibende Modellgleichungen miteinander verknüpft, wobei diese Modellgleichungen bei fehlerfreien Bauteilen durch einen bestimmten Parametersatz bestimmt sind. Werden nun bei variablen Parametern die Modellgleichungen für die aktuell gemessenen, das Verhalten des Prozesses charakterisierenden Größen gelöst, so kann aus einer Abweichung der Parameter des aktuell ermittelten Parametersatzes von dem bestimmten Parametersatz auf Fehler an einem oder mehreren Bauteilen geschlossen werden, wenn die Auswirkungen von Fehlern eines oder mehrerer Bauteile auf Änderungen eines oder mehrerer Parameter des Parametersatzes a priori bekannt sind.

Bei diesem Verfahren wäre es nur mit einem sehr großen Aufwand möglich, während des Schaltvorganges eines durch magnetische Wechselwirkung zwischen einer Ruhelage und einer Endlage beweglichen Bauteiles eines induktiven elektrischen Verbrauchers zu erkennen, in welchem Zustand sich das bewegliche Bauteil gerade befindet. Diese Zuordnung der Zustände des beweglichen Bauteiles zu einzelnen Zeitpunkten wäre mit großen Unsicherheiten behaftet.

Des weiteren ist es bekannt (DE 34 35 465 A1), von einer Verarbeitungsroutine in einer Steuereinrichtung angesteuerte Verbraucher zu testen, indem diese Verbraucher von Testroutinen mit Testsignalen beaufschlagt werden, wenn die Verbraucher nicht durch die Verarbeitungsroutine der Steuereinrichtung angesteuert werden.

Bei diesem Verfahren ergeben sich Nachteile dahin gehend, daß ein Test nur dann erfolgen kann, wenn die Verbraucher nicht von der Verarbeitungsroutine angesteuert werden, so daß keine Aussage über den momentanen Zustand des beweglichen Bauteiles getroffen werden kann.

Außerdem ist es bekannt (DE 26 10 558 A1), das Erreichen der Endlage eines Verbrauchers bei einem Schaltvorgang durch einen Schalter zu erkennen, der durch den Verbraucher dann betätigt wird, wenn dieser die Endlage erreicht.

Nachteilig ist dabei, daß ein zusätzlicher Schalter vorhanden sein muß, der zusätzliche Kosten verursacht und außerdem eine Fehlerquelle darstellt.

Aufgabe der Erfindung ist es, ein möglichst einfaches Verfahren zu entwickeln, mit dem mit möglichst großer Sicherheit und geringen Zeitverzögerungen auf den momentanen Bewegungs- und Lagezustand eines durch magnetische Wechselwirkung zwischen einer Ruhelage und einer Endlage beweglichen Bauteiles eines induktiven elektrischen Verbrauchers geschlossen werden kann.

Diese Aufgabe wird bei einem gattungsgemäßen Verfahren zur Bewegungs- und Lagezustandserkennung eines durch magnetische Wechselwirkung zwischen einer Ruhelage und einer Endlage beweglichen Bauteiles eines induktiven elektrischen Verbrauchers erfindungsgemäß mit den kennzeichnenden Merkmalen des Anspruchs 1 gelöst, wobei die Merkmale der Unteransprüche vorteilhafte Aus- und Weiterbildungen kennzeichnen.

Weitere Vorteile der Erfindung gegenüber dem bekannten Stand der Technik bestehen darin, daß aus dem Erkennen eines Erreichens der Endlage des durch magnetische Wechselwirkung beweglichen Bauteiles eines induktiven elektrischen Verbrauchers der Haltestrom $I_{Halte}$ für diese Endlage auf den zum Erreichen der Endlage benötigten Ansteuerstrom bezogen werden kann. Aus einer Änderung der Größe des für das Erreichen der Endlage benötigten Ansteuerstromes gegenüber einem Referenzwert für diesen Ansteuerstrom kann außerdem auf mögliche Defekte des induktiven elektrischen Verbrauchers rückgeschlossen werden. Außerdem kann durch einen Zugriff auf Zwischenwerte einer Differenziereinheit eine schnellere Reaktion auf zeitliche Veränderungen des Ansteuerstromes erfolgen.

Der Ansteuerstrom eines induktiven elektrischen Verbrauchers mit einem durch magnetische Wechselwirkung beweglichen Bauteil hat aufgrund der Bewegung des beweglichen Bauteiles einen charakteristischen Verlauf derart, daß sich die Änderungsrichtung des Ansteuerstromes ändert, wenn sich das bewegliche Bauteil aus seiner Ruhelage oder seiner Endlage heraus in Bewegung setzt. Aus diesem Grund wird bei dem erfindungsgemäßen Verfahren eine Differentiation des Ansteuerstromes des induktiven elektrischen Verbrauchers durchgeführt, so daß aus einer Änderung der Änderungsrichtung des Ansteuerstromes erkannt werden kann, ob sich das bewegliche Bauteil aus seiner Ruhelage oder seiner Endlage heraus in Bewegung setzt bzw. ob die Zielposition erreicht ist. Aus dem zeitlichen Verlauf des Ansteuerstromes während sich das bewegliche Bauteil in Ruhe befindet können außerdem Rückschlüsse auf Betriebsbedingungen bzw. Funktionsstörungen des induktiven elektrischen Verbrauchers gezogen werden.

Wird erkannt, daß sich das bewegliche Bauteil aus seiner Ruhelage oder seiner Endlage heraus in Bewegung setzt, ist es beispielsweise möglich, den Haltestrom $I_{Halte}$ für das bewegliche Bauteil auf den Ansteuerstrom zu beziehen, der notwendig war, um das bewegliche Bauteil in Bewegung zu versetzen. Somit ist es in einfacher Weise möglich, Änderungen der Dynamik des beweglichen Bauteiles aufgrund von Temperaturschwankungen oder aufgrund von Bordnetzspannungsschwankungen in einem Kraftfahrzeug zu kompensieren, ohne einen unnötig großen Haltestrom $I_{Halte}$ zu beaufschlagen. Der Haltestrom $I_{Halte}$ kann dabei beispielsweise linear ansteigen mit der Größe des Ansteuerstromes, der notwendig ist, um das bewegliche Bauteil in Bewegung zu versetzen.

Ein Ausführungsbeispiel der Erfindung ist in der Zeichnung schematisch dargestellt und wird im folgenden näher beschrieben. Dabei erfolgt ohne Beschränkung der Allgemeinheit die Darstellung der Verhältnisse an einem Schaltventil. Dabei entspricht das Schaltventil dem induktiven elektrischen Verbraucher und der Schaltventilanker dem beweglichen Bauteil. Entsprechend können die Verhältnisse auf weitere Ausführungsbeispiele wie beispielsweise ein Relais übertragen werden. Es zeigen:

Fig. 1: eine Darstellung des zeitlichen Verlaufes des Ansteuerstromes eines Schaltventiles,

Fig. 2: eine Vorrichtung zur Durchführung der Differentiation des Ansteuerstromes, zur Darstellung der Zustände des Schaltventilankers sowie zur Auswertung dieser Zustände zur Ableitung weiterer Parameter,

Fig. 3: eine Darstellung der Beschreibung der Zustände des Schaltventilankers und

Fig. 4: eine Darstellung des zeitlichen Verlaufes des Ansteuerstromes bei einer getakteten Bestromung des Schaltventiles.

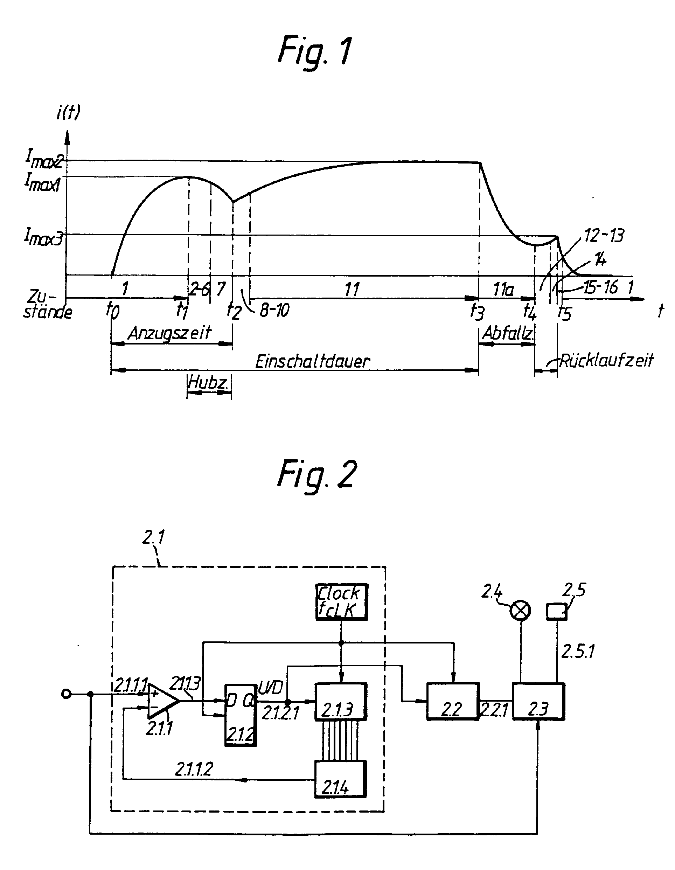

Das Schaltventil stellt einen induktiven elektrischen Verbraucher dar, so daß sich ein Verlauf des Ansteuerstromes entsprechend der Darstellung der Fig. 1 ergibt. Zum Zeitpunkt $t_0$ wird dem Schaltventil ein Sollwert eines Ansteuerstromes übergeben, der eine solche Größenordnung aufweist, daß sich der Schaltventilanker aus seiner Ruhelage in Richtung seiner Endlage in Bewegung setzt, wenn der Wert des Ansteuerstromes diesen Sollwert erreicht. Der Ansteuerstrom steigt daraufhin mit einem Ansprechverzug an nach der Gleichung:

$$i(t) = I_{max1} * ( 1 - \exp\{ - (t - t_0)/t_{aus}\} ) .$$

Zum Zeitpunkt $t_1$ setzt sich der Schaltventilanker so in Bewegung, daß aufgrund der Lenz'schen Regel diese Bewegung des Schaltventilankers eine solche Spannung induziert, die ihrer Ursache - dem Ansteuerstrom - entgegenwirkt. Somit ergibt sich für die Zeitspanne ab dem Zeitpunkt $t_1$ bis zu dem Zeitpunkt $t_2$, zu dem der Schaltventilanker in seiner Endlage angeschlagen ist, insgesamt eine Abnahme des Ansteuerstromes. Da sich der magnetische Kreis dann geschlossen hat, erfolgt von dem Zeitpunkt $t_2$ bis zu dem Zeitpunkt $t_3$, zu dem der dem Schaltventil übergebene Sollwert des Ansteuerstromes gleich null wird, eine Zunahme des Ansteuerstromes mit der Zeitkonstanten $t_{ein}$, die größer ist als die Zeitkonstante $t_{aus}$, nach der Gleichung:

$$i(t) = I_{max2} * ( 1 - \exp\{ - (t - t_2)/t_{ein} \} ) .$$

Der Schaltventilanker setzt sich zu dem Zeitpunkt $t_3$ noch nicht sofort in Richtung seiner Ruhelage in Bewegung, da eine Spannung induziert wird, die der plötzlichen Abnahme des Ansteuerstromes entgegen wirkt und somit zu einem zeitlich verzögerten Abbau des Ansteuerstromes führt. Dieser abfallende Ansteuerstrom hält somit bis zu dem Zeitpunkt $t_4$ den Schaltventilanker in der Endlage. Zu dem Zeitpunkt $t_4$ hat der Ansteuerstrom den zum Halten der Endlage notwendigen Haltestrom $I_{Halte}$ unterschritten, so daß sich der Schaltventilanker in Richtung seiner Ruhelage in Bewegung setzt. Da der magnetische Kreis immer noch geschlossen ist, fällt der Ansteuerstrom von der Zeitspanne $t_3$ bis zur Zeitspanne $t_4$ mit der Zeitkonstanten $t_{ein}$ ab nach der Gleichung:

$$i(t) = I_{max2} * \exp\{ - (t - t_3)/t_{ein} \} .$$

Die Bewegung des Schaltventilankers aus der Endlage in Richtung seiner Ruhelage ab dem Zeitpunkt $t_4$ bis zu dem Erreichen der Ruhelage zum Zeitpunkt $t_5$ bewirkt eine Induktion einer Spannung, die der Ursache der Bewegung des Schaltventilankers - dem abfallenden Ankerstrom - entgegen gerichtet ist. Somit ist in der Zeitspanne von $t_4$ nach $t_5$ ein Ansteigen des Ansteuerstromes festzustellen. Nach dem Erreichen der Ruhelage zum Zeitpunkt $t_5$ fällt der Ansteuerstrom aufgrund des geöffneten magnetischen Kreises mit der Zeitkonstanten $t_{aus}$ ab nach der Gleichung:

$$i(t) = I_{max3} * \exp\{ - (t - t_5)/t_{aus} \} .$$

Bei einer Auswertung der charakteristischen Größen dieses Verlaufes des Ansteuerstromes über der Zeit kann beispielsweise die Größe des Haltestromes $I_{Halte}$ des Schaltventilankers in Abhängigkeit des Stromes zum Zeitpunkt $t_1$ oder zum Zeitpunkt $t_2$ vorgegeben werden. Dabei kann diese Abhängigkeit derart sein, daß der Haltestrom $I_{Halte}$ linear ansteigt mit der Größe des entsprechenden Stromes zum Zeitpunkt $t_1$ oder $t_2$. Dazu ist es notwendig, eine Differentiation des zeitlichen Verlaufes des Ansteuerstromes durchzuführen, um die Richtungsänderung des Verlaufes von dem Zeitpunkt $t_1$ zu dem Zeitpunkt $t_2$ gegenüber der Richtung des Verlaufes von dem Zeitpunkt $t_0$ zu dem Zeitpunkt $t_1$ und damit den Zeitpunkt $t_1$ erkennen zu können. Entsprechend gilt, daß eine Differentiation des zeitlichen Verlaufes des Ansteuerstromes durchzuführen ist, um die Richtungsänderung des Verlaufes von dem Zeitpunkt $t_2$ zu dem Zeitpunkt $t_3$ gegenüber der Richtung des Verlaufes von dem Zeitpunkt $t_1$ zu dem Zeitpunkt $t_2$ und damit den Zeitpunkt $t_2$ zu erkennen, wenn der Haltestrom $I_{Halte}$ auf den Wert des Ansteuerstromes zum Zeitpunkt $t_2$ bezogen werden soll. Des weiteren kann aus dem gemessenen Verlauf des Ansteuerstromes eine Identifikation der Parameter der einzelnen Teilstücke des Verlaufes des Ansteuerstromes entsprechend den angeführten Gleichungen durchgeführt werden. Somit ist es durch einen Vergleich der aufgrund der Parameteridentifikation bestimmten Parameter mit zugehörigen Referenzwerten möglich, auf Betriebsbedingungen bzw. Funktionsstörungen zu schließen. Die Zeitkonstanten $t_{ein}$ und $t_{aus}$ sind von dem verwendeten Schaltventil abhängig und ergeben sich aus dem ohmschen und dem induktiven Widerstand.

Wie der Darstellung der Fig. 2 zu entnehmen ist, erfolgt in dem Vorrichtungsteil 2.1 eine Differentiation des Ansteuerstromes des Schaltventiles, indem mittels des Up/Down - Signales (U/D - Signal) in der Zustandserkennungsvorrichtung 2.2 auf die Steigung des Ansteuerstromes des Schaltventiles geschlossen wird. Eine Differentiation des Ansteuerstromes des Schaltventiles erfolgt dabei in dem Ausführungsbeispiel der Fig. 2, indem in dem Eingangskomparator 2.1.1 der Wert des aktuell gemessenen Ansteuerstromes mit einem in dem 7 bit-Zähler 2.1.3 in dem letzten Clockzyklus nachgebildeten Wert des Ansteuerstromes verglichen wird. Der Wert des 7 bit-Zählers 2.1.3 wird durch den A/D-Wandler 2.1.4 in einen Analogwert gewandelt und über die Signalleitung 2.1.1.2 dem Eingangskomparator 2.1.1 zugeführt. Der Wert des aktuell gemessenen Ansteuerstromes wird dem Eingangskomparator über die Signalleitung 2.1.1.1 zugeführt.

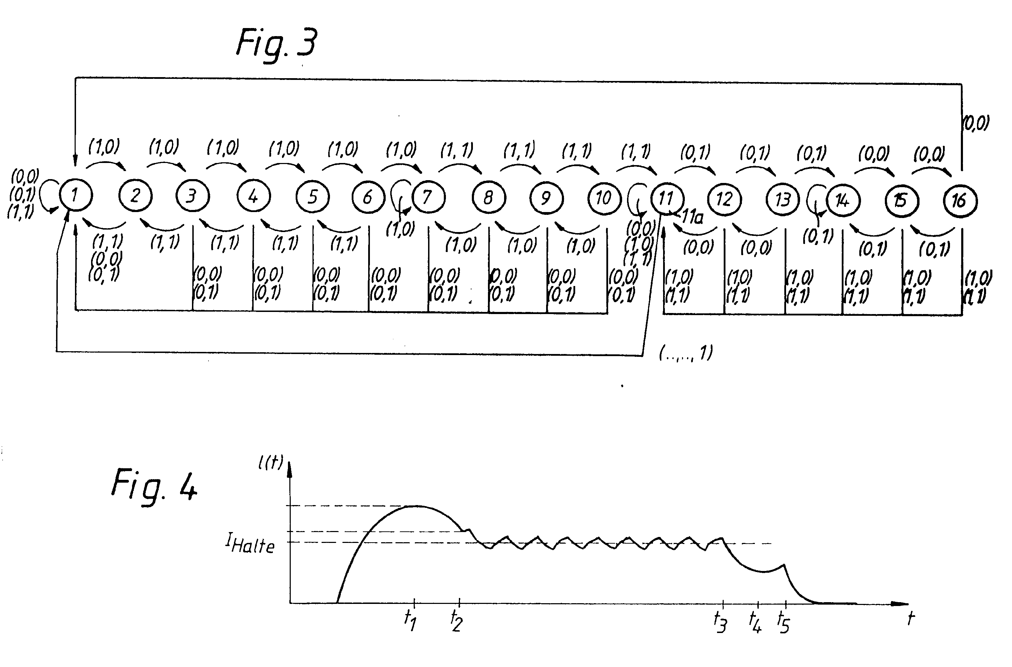

Das Ausgangssignal 2.1.1.3 des Eingangskomparators 2.1.1 wird einem Flipflop 2.1.2 zugeführt und führt somit mittels des Ausgangssignales 2.1.2.1 (U/D - Signal) in jedem Clockzyklus zu einem Aufwärts- bzw. Abwärtszählen des 7 bit-Zählers 2.1.3 um ein bit, wobei die Zählrichtung davon abhängt, ob der aktuell gemessene Ansteuerstrom größer oder kleiner als der während des letzten Clockzyklus gemessene Ansteuerstrom ist. Dieses U/D - Signal wird der Zustandserkennungsvorrichtung 2.2 zugeführt, in der aus der Anzahl der Schritte, in denen der Wert des 7 bit-Zählers 2.1.3 aufwärts bzw. abwärts gezählt wird, die Steigung des Ansteuerstromes ermittelt wird. Dies kann beispielsweise entsprechend dem in Fig. 3 dargestellten Verfahren geschehen. In dem Vorrichtungteil 2.1 ist noch auf eine geeignete Einstellung der Clockfrequenz $f_{CLK}$ zu achten. Da der 7 bit-Zähler 2.1.3 während einer Clockperiode nur um ein niederwertigstes bit erhöht bzw. erniedrigt werden kann, muß die Clockfrequenz $f_{CLK}$ in Abhängigkeit der größtmöglich auftretenden Zeitableitung $SR_{max}$ des Ansteuerstromes und der Auflösung $V_{auf}$ des 7 bit-Zählers eingestellt werden. Die Auflösung $V_{auf}$ ergibt sich dabei aus dem größtmöglichen durch den 7 bit-Zähler darstellbaren Wert dividiert durch die durch den 7 bit-Zähler darstellbaren Zustände. Es ergibt sich somit für die Clockfrequenz $f_{CLK}$:

$$f_{CLK} = SR_{max} / V_{auf}.$$

Einer Auswertungseinheit 2.3 werden dann die von der Zustandserkennungsvorrichtung erkannten Zustände des Schaltventiles über die Signalleitung 2.2.1 zugeführt. Außerdem kann dieser Auswertungseinheit 2.3 noch der Wert des aktuell gemessenen Ansteuerstromes zugeführt werden. Es ist dann beispielsweise möglich, in der Auswertungseinheit verschiedene, die Bewegung des Ventilankers charakterisierende Größen mit vorgegebenen Referenzwerten dahin gehend zu vergleichen, ob die Abweichungen jeweils vorgegebene Grenzwerte überschreiten. Als die Bewegung des Ventilankers charakterisierende Größen bieten sich beispielsweise die Größe der Zeitspannen $(t_5-t_4)$ oder $(t_2-t_1)$ an oder die Ansteuerströme zu den Zeitpunkten $t_1$ oder $t_4$ zu denen sich der Ventilanker gerade aus der Ruhe- bzw. Endlage in Bewegung setzt. Ebenso kann aus dem gemessenen Verlauf des Ansteuerstromes eine Identifikation der Parameter der einzelnen Teilstücke des Verlaufes des Ansteuerstromes entsprechend den in der Beschreibung der Fig. 1 angeführten Gleichungen durchgeführt werden. Somit ist es durch einen Vergleich der aufgrund der Parameteridentifikation bestimmten Parameter mit zugehörigen Referenzwerten möglich, auf Betriebsbedingungen bzw. Funktionsstörungen zu schließen. Wird eine Abweichung eines dieser Werte von dem zugehörigen Referenzwert oberhalb eines Grenzwertes festgestellt, kann beispielsweise eine Informationsausgabeeinheit angesteuert werden. In dem Ausführungsbeispiel der Fig. 2 ist diese Informationsausgabeeinheit als Lampe 2.4 dargestellt. Ebenso ist es beispielsweise möglich, die Größe des Haltestromes $I_{Halte}$, der den Ventilanker in dessen Endlage halten soll, auf die Größe des Ansteuerstromes zu beziehen, der sich zum Zeitpunkt $t_1$ eingestellt hatte, als sich der Ventilanker in Bewegung setzte. Somit ist eine adaptive Einstellung der Größe des Haltestromes $I_{Halte}$ auf sich verändernde Umgebungsbedingungen wie z.B. die Temperatur des Schaltventiles oder Spannungsschwankungen im Bordnetz eines Kraftfahrzeuges möglich. Die Zuordnung der Größe des Haltestromes $I_{Halte}$ zur Größe des Ansteuerstromes, der sich zum Zeitpunkt $t_1$ eingestellt hatte, hängt dabei von den Betriebsbedingungen des Schaltventiles ab wie z.B. von Erschütterungen. Wurde in der Auswertungseinheit 2.3 ein Sollwert für einen Haltestrom $I_{Halte}$ ermittelt, kann dieser über die Signalleitung 2.5.1 einer Regeleinrichtung 2.5 zur Einstellung dieses Haltestromes $I_{Halte}$ zugeführt werden.

Der Darstellung der Fig. 3 ist zu entnehmen, daß der zeitliche Verlauf des Ansteuerstromes in mehrere Zustände unterteilt werden kann, wobei in dem vorliegenden Ausführungsbeispiel eine Unterteilung in 16 Zustände vorgenommen ist. Ein Übergang von einem Zustand in einen anderen wird aufgrund eines Parametersatzes erkannt, wobei der Parametersatz in dem vorliegenden Ausführungsbeispiel aus zwei einzelnen Parametern besteht. Der erste dieser Parameter beschreibt den Sollwert des Ansteuerstromes, wobei der Wert dieses Parameters gleich 1 ist, wenn der Sollwert des Ansteuerstromes einen solchen Wert annimmt, daß sich der Schaltventilanker aus seiner Ruhelage in Richtung seiner Endlage in Bewegung setzt, wenn der Wert des Ansteuerstromes diesem Sollwert entspricht. Ist der Sollwert des Ansteuerstromes gleich 0, so ist der Wert dieses ersten Parameters ebenfalls gleich 0. Der zweite dieser Parameter beschreibt die Steigung des Ansteuerstromes über der Zeit (U/D - Signal). Wird der Ansteuerstrom größer, nimmt dieser Parameter den Wert 1 an. Bleibt der Ansteuerstrom konstant oder wird kleiner, nimmt dieser Parameter den Wert 0 an.

Der Zustand 1 entspricht dabei der Zeitspanne von $t_0$ bis $t_1$. Dieser Zustand ist dadurch charakterisiert, daß der dem Schaltventil übergebene Sollwert des Ansteuerstromes eine solche Größenordnung annimmt, daß der erste Parameter des Parametersatzes den Wert 1 annimmt. Dies führt dazu, daß der Ansteuerstrom während dieser Zeitspanne monoton steigend ist. Dieser Zustand 1 wird beibehalten, wenn die Parameter des Parametersatzes den Wert (1,1) haben.

Wird dem Schaltventil ein solcher Sollwert des Ansteuerstromes übergeben, daß der erste Parameter des Parametersatzes den Wert 1 annimmt und wird gleichzeitig festgestellt, daß der Ansteuerstrom fallend ist - das heißt, daß der zweite Parameter des Parametersatzes den Wert 0 annimmt -, wenn das Schaltventil vorher in dem Zustand 1 war, so geht das Schaltventil in einen Zustand 2 über. Die Parameter des Parametersatzes haben dann den Wert (1,0). Dieser Zustand 2 geht in den Zustand 1 zurück, wenn der Ansteuerstrom steigend ist, ohne daß vorher das Erreichen der Endlage zum Zeitpunkt $t_2$ erkannt wurde. Die Parameter des Parametersatzes haben dann den Wert (1,1). Dadurch ist gewährleistet, daß die zeitliche Änderung des Ansteuerstromes mit einer Filterung bewertet wird, so daß keine kurzzeitigen Störungen des Ansteuerstromes zu einer Bewertung des Ansteuerstromes führen können, die zu einer falschen Interpretation des Zustandes führt. Diese Filterung kann beispielsweise auch durchgeführt werden, indem an sich bekannte analoge oder digitale Filter eingesetzt werden, wobei dann zweckmäßigerweise geschlossen wird, daß sich der Schaltventilanker in Bewegung gesetzt hat, wenn die Zeitspanne, während der der Ansteuerstrom monoton fallend war, einen vorgegebenen Schwellwert überschreitet. In dem Ausführungsbeispiel der Fig. 3 wird dies realisiert, indem in bestimmten Zeitabständen überprüft wird, ob der momentan gemessene Ansteuerstrom größer oder kleiner als der zu dem letzten Zeitpunkt gemessene Ansteuerstrom ist. Ausgehend von dem Zustand 2 erfolgt dann ein Übergang zu Zuständen 3, 4, 5 und 6, wenn dem Schaltventil ein Sollwert des Ansteuerstromes übergeben wird, der dazu führt, daß der erste Parameter des Parametersatzes den Wert 1 annimmt und wenn gleichzeitig zu den bestimmten Zeitabständen festgestellt wird, daß der momentan gemessene Ansteuerstrom kleiner ist als der zum jeweils letzten Zeitpunkt gemessene Ansteuerstrom. Das heißt, daß die Parameter des Parametersatzes bei jedem dieser Übergänge die Wertekombination (1,0) annehmen. Wird während eines der Zustände 2 bis 6 festgestellt, daß der momentan anliegende Ansteuerstrom größer ist als der zum jeweils letzten Zeitpunkt gemessene Ansteuerstrom, wird die Nummer des aktuellen Zustandes um 1 erniedrigt. Die Parameter des Parametersatzes haben dann die Wertekombination (1,1). Dies erfolgt gegebenenfalls bis wiederum der Zustand 1 erreicht ist. Mittels dieser Charakterisierung des zeitlichen Verlaufes des Ansteuerstromes durch einzelne Zustände kann beispielsweise eine Reduktion des Ansteuerstromes, wenn sich der Schaltventilanker in Bewegung gesetzt hat, bedingt durch die Art der Filterung mit einer sehr kurzen Zeitkonstanten erfolgen. Die eigentliche Filterung ist in dem in Fig. 3 dargestellten Ausführungsbeispiel erst beendet, wenn der Zustand 7 erreicht worden ist. Eine Reduktion des Ansteuerstromes kann nun aber beispielweise schon dann erfolgen, wenn der Zustand 3 erreicht ist. Erfolgt dabei eine zu starke Reduktion des Ansteuerstromes, erfolgt eine Rückkehr zum Zustand 2, wobei dann wiederum eine Erhöhung des Ansteuerstromes erfolgen kann. Ist der Zustand 2 erreicht und soll eine Reduzierung des Ansteuerstromes in Abhängigkeit der Größe des Ansteuerstromes zum Zeitpunkt $t_1$ erfolgen, kann bereits während der Filterung die Größe des reduzierten Ansteuerstromes ermittelt werden. Somit können ggf. Maßnahmen eingeleitet werden, bevor die Filterung beendet ist.

Wird in dem Zustand 6 erkannt, daß der momentan gemessene Ansteuerstrom kleiner ist als der zum letzten Zeitpunkt gemessene Ansteuerstrom, wird der Zustand 7 erkannt. Die Parameter des Parametersatzes haben dann die Wertekombination (1,0). Bei weiter abfallendem Ansteuerstrom verbleibt der Zustand 7 bis zum Erreichen der Endlage des Schaltventilankers zum Zeitpunkt $t_2$.

Wird dem Schaltventil ein solcher Sollwert des Ansteuerstromes übergeben, der dazu führt, daß der erste Parameter des Parametersatzes den Wert 1 annimmt und wird gleichzeitig festgestellt, daß der Ansteuerstrom steigend ist, wenn das Schaltventil vorher in dem Zustand 7 war, so wird das Erreichen der Endlage des Schaltventilankers zum Zeitpunkt $t_2$ erkannt und das Schaltventil geht in einen Zustand 8 über. Die Parameter des Parametersatzes haben dann die Wertekombination (1,1). Dieser Zustand 8 geht in den Zustand 7 zurück, wenn das Schaltventil mit einem Ansteuerstrom beaufschlagt wird und dieser Ansteuerstrom fallend ist. Die Parameter des Parametersatzes haben dann die Wertekombination (1,0). Zweckmäßigerweise wird auch hier die zeitliche Änderung des Ansteuerstromes mit einer Filterung bewertet, so daß keine kurzzeitigen Störungen des Ansteuerstromes zu einer Bewertung des Ansteuerstromes führen können, die zu einer falschen Interpretation des Zustandes führt. Diese Filterung kann beispielsweise auch hier durchgeführt werden, indem an sich bekannte analoge oder digitale Filter eingesetzt werden, wobei dann zweckmäßigerweise auf ein Erreichen der Endlage des Schaltventilankers geschlossen wird, wenn die Zeitspanne, während der der Ansteuerstrom monoton steigend war, einen vorgegebenen Schwellwert überschreitet. In dem Ausführungsbeispiel der Fig. 3 wird dies realisiert, indem in bestimmten Zeitabständen überprüft wird, ob der momentan gemessene Ansteuerstrom größer oder kleiner als der zu dem letzten Zeitpunkt gemessene Ansteuerstrom ist. Ausgehend von dem Zustand 7 erfolgt dann ein Übergang zu Zuständen 8, 9 und 10, wenn dem Schaltventil ein solcher Sollwert des Ansteuerstromes übergeben wird, der dazu führt, daß der erste Parameter des Parametersatzes den Wert 1 annimmt und wenn gleichzeitig zu den bestimmten Zeitabständen festgestellt wird, daß der momentan gemessene Ansteuerstrom größer ist als der zum jeweils letzten Zeitpunkt gemessene Ansteuerstrom. Das bedeutet, daß die Parameter des Parametersatzes die Wertekombination (1,1) aufweisen. Wird während eines der Zustände 8 bis 10 festgestellt, daß der momentan gemessene Ansteuerstrom kleiner ist als der zum jeweils letzten Zeitpunkt gemessene Ansteuerstrom, wird die Nummer des aktuellen Zustandes um 1 erniedrigt. Die Parameter des Parametersatzes haben dann die Wertekombination (1,0). Dies erfolgt gegebenenfalls bis wiederum der Zustand 7 erreicht ist. Auch hierbei können analog der Beschreibung der Verhältnisse bei den Zuständen 2 bis 6 Maßnahmen frühzeitig vor dem Ende der eigentlichen F ilterung eingeleitet werden, indem nicht das Erreichen des Zustandes 11 abgewartet sondern schon beim Erreichen eines der Zustände 8 bis 10 Maßnahmen ergriffen werden.

Wird bei einem der beschriebenen Zustände 1 bis 10 dem Schaltventil ein Sollwert des Ansteuerstromes entsprechend einem Wert 0 übergeben, so erfolgt eine Zuordnung zu dem Zustand 1 unabhängig davon, ob der Ansteuerstrom steigt oder fällt. Die Parameter des Parametersatzes haben dann eine der Wertekombinationen (0,0) oder (0,1).

Wird in dem Zustand 10 erkannt, daß der momentan gemessene Ansteuerstrom größer ist als der zum letzten Zeitpunkt gemessene Ansteuerstrom, wird der Zustand 11 erkannt. Die Parameter des Parametersatzes haben dann die Wertekombination (1,1). Dieser Zustand 11 wird erst dann verlassen, wenn der Zeitpunkt $t_4$ erreicht ist. Das heißt, daß der Zustand 11 beibehalten wird, wenn die Parameter des Parametersatzes eine der Wertekombinationen (0,0), (1,0), (1,1) aufweisen. Allerdings ist es auch möglich, den Zustand 11 in weitere einzelne Zustände so zu unterteilen, daß beispielsweise zum Zeitpunkt $t_3$ ein neuer Zustand 11a beginnt. Der Übergang von dem Zustand 11 zu diesem Zustand 11a erfolgt dann, wenn die Parameter des Parametersatzes eine der Wertekombinationen (0,0) oder (0,1) einnehmen. Es ist somit beispielweise möglich, aus der Größe der Zeitspanne $(t_4-t_3)$ eine Aussage über die Beweglichkeit des Schaltventilankers zu treffen.

In dem in Fig. 3 dargestellten Ausführungsbeispiel verbleibt der Zustand 11 bis zum Zeitpunkt $t_4$, d. h., daß der Zustand 12 dann erkannt wird, wenn der dem Schaltventil übergebene Sollwert des Ansteuerstromes gleich 0 wird und wenn gleichzeitig der Ansteuerstrom ansteigt. Die Parameter des Parametersatzes haben dann die Wertekombination (0,1). Zusätzlich zu diesem Kriterium für den Übergang in den Zustand 12 kann der Parametersatz noch um einen weiteren Parameter erweitert werden. Dieser dritte Parameter nimmt dabei den Wert 0 an, wenn der Wert des Ansteuerstromes oberhalb eines Schwellwertes liegt und dieser dritte Parameter nimmt dabei den Wert 1 an, wenn der Wert des Ansteuerstromes unterhalb des Schwellwertes liegt. Dabei kann der Schwellwert in der Größenordnung von 5% des Wertes des Stromes $I_{max1}$ liegen. Wird dabei in dem Zustand 11 erkannt, daß der dritte Parameter den Wert 1 annimmt, kann dann ein Zurücksetzen zu dem Zustand 1 erfolgen. Es wurde dann keiner der Zustände 12-16 erkannt. Dies kann dann erfolgen, wenn der Anstieg des Ansteuerstromes zwischen den beiden Zeitpunkten $t_4$ und $t_5$ so schwach und/oder so kurz ist, daß ausgehend von dem Zustand 11 kein Übergang zu höheren Zuständen erfolgt. Der Zustand 12 geht in den Zustand 11 zurück, wenn der dem Schaltventil übergebene Sollwert des Ansteuerstromes gleich 0 ist und wenn der Ansteuerstrom fallend ist. Die Parameter des Parametersatzes haben dann die Wertekombination (0,0). Zweckmäßigerweise wird auch hier die zeitliche Änderung des Ansteuerstromes mit einer Filterung bewertet, so daß keine kurzzeitigen Störungen des Ansteuerstromes zu einer Bewertung des Ansteuerstromes führen können, die zu einer falschen Interpretation des Zustandes führt. Diese Filterung kann beispielsweise auch hier durchgeführt werden, indem an sich bekannte analoge oder digitale Filter eingesetzt werden, wobei dann zweckmäßigerweise geschlossen wird, daß sich der Schaltventilanker aus der Endlage in Richtung der Ruhelage bewegt, wenn die Zeitspanne, während der der Ansteuerstrom monoton steigend war, einen vorgegebenen Schwellwert überschreitet. In dem Ausführungsbeispiel der Fig. 3 wird dies realisiert, indem in bestimmten Zeitabständen überprüft wird, ob der momentan gemessene Ansteuerstrom größer oder kleiner als der zu dem letzten Zeitpunkt gemessene Ansteuerstrom ist. Ausgehend von dem Zustand 12 erfolgt dann ein Übergang zu einem Zustand 13, wenn der dem Schaltventil übergebene Sollwert des Ansteuerstromes gleich 0 ist und wenn gleichzeitig zu den bestimmten Zeitabständen festgestellt wird, daß der momentan gemessene Ansteuerstrom größer ist als der zum jeweils letzten Zeitpunkt gemessene Ansteuerstrom. Die Parameter des Parametersatzes haben dann die Wertekombination (0,1). Wird während des Zustandes 13 festgestellt, daß der momentan gemessene Ansteuerstrom kleiner ist als der zum letzten Zeitpunkt gemessene Ansteuerstrom, wird die Nummer des aktuellen Zustandes um 1 erniedrigt, so daß wieder der Zustand 12 erreicht wird. Die Parameter des Parametersatzes haben dann die Wertekombination (0,0). Wird während des Zustandes 13 festgestellt, daß der momentan gemessene Ansteuerstrom größer ist als der im letzten Zeitpunkt gemessene Ansteuerstrom, erfolgt ein Übergang zu dem Zustand 14. Die Parameter des Parametersatzes haben dann die Wertekombination (0,1).

Dieser Zustand 14 wird dabei beibehalten, wenn der Ansteuerstrom weiter ansteigt, das heißt, wenn die Parameter des Parametersatzes die Wertekombination (0,1) annehmen. Zum Zeitpunkt $t_5$ wird dabei das Erreichen der Ruhelage des Schaltventilankers erkannt, wenn der dem Schaltventil übergebene Sollwert des Ansteuerstromes gleich 0 ist und wenn der Ansteuerstrom kleiner wird. Die Parameter des Parametersatzes haben dann die Wertekombination (0,0) und es erfolgt ein Übergang zu dem Zustand 15. Wird während des Zustandes 15 festgestellt, daß der Ansteuerstrom weiter fällt, erfolgt ein Übergang zu dem Zustand 16. Die Parameter des Parametersatzes haben die Wertekombination (0,0). Ist der dem Schaltventil während des Zustandes 16 übergebene Sollwert des Ansteuerstromes nach wie vor gleich 0, erfolgt bei weiter kleiner werdendem Ansteuerstrom eine Rückkehr zum Zustand 1. Die Parameter des Parametersatzes haben dann die Wertekombination (0,0). Erfolgt bei einem der Zustände 15 oder 16 ein Anstieg des Ansteuerstromes und ist der dem Schaltventil übergebene Sollwert des Ansteuerstromes gleich 0, so wird die Nummer des aktuellen Zustandes um 1 erniedrigt. Die Parameter des Parametersatzes haben dann die Wertekombination (0,1).

Wird bei einem der Zustände 12 bis 16 dem Schaltventil ein Sollwert des Ansteuerstromes übergeben, der dazu führt, daß der erste Parameter des Parametersatzes den Wert 1 annimmt, erfolgt eine Rückkehr zum Zustand 11 unabhängig davon, ob der Ansteuerstrom ansteigt oder abfällt. Die Parameter des Parametersatzes haben dann eine der Wertekombinationen (1,0) oder (1,1).

Eine Abwandlung des Ausführungsbeispieles der Fig. 3 ergibt sich beispielsweise dadurch, daß die Filterzeitkonstanten bei der Differentiation des Ansteuerstromes anders gewählt werden, so daß sich in Anlehnung an das Ausführungsbeispiel der Fig. 3 eine andere Einteilung der einzelnen Zustände ergibt.

Fig. 4 zeigt einen charakteristischen Verlauf des Ansteuerstromes eines Schaltventiles bei dem nach dem Erkennen des Erreichens der Endlage des Schaltventilankers eine getaktete Bestromung erfolgt, so daß sich ein mittlerer Haltestrom $I_{Halte}$ einstellt, der gemäß der Darstellung der Fig. 4 auf den zum Zeitpunkt $t_2$ fließenden Ansteuerstrom bezogen ist und beispielsweise 80% dieses Ansteuerstromes beträgt. Ebenso ist es auch möglich, den Haltestrom $I_{Halte}$ auf den zum Zeitpunkt $t_1$ fließenden Ansteuerstrom zu beziehen, wobei der Haltestrom $I_{Halte}$ dann in der Größenordnung von ca. 70-80% dieses Stromes liegt.

**Patentansprüche**

1. Verfahren zur Bewegungs- und Lagezustandserkennung eines durch magnetische Wechselwirkung zwischen einer Ruhelage und einer Endlage beweglichen Bauteiles eines induktiven elektrischen Verbrauchers,
   wobei aus einer Kombination des Sollwertes des Ansteuerstromes und der zeitlichen Ableitung des Ansteuerstromes geschlossen wird, ob das bewegliche Bauteil des induktiven elektrischen Verbrauchers in Bewegung ist, wobei bei einer Bewegung des beweglichen Bauteiles die Änderung der Änderungsrichtung des Ansteuerstromes in Abhängigkeit des Sollwertes des Ansteuerstromes ausgewertet wird, **dadurch gekennzeichnet,**

- daß der gesamte zeitliche Verlauf des Ansteuerstromes des induktiven elektrischen Verbrauchers in mehrere Zustände unterteilt wird, die den Bewegungs- und Lagezustand des beweglichen Bauteiles charakterisieren,
- daß ein Parametersatz aus wenigstens zwei binäre Werte annehmenden Parametern bestimmt wird,
  - wobei der erste Parameter den Sollwert des Ansteuerstromes charakterisiert,
    - wobei dieser erste Parameter den Wert 1 annimmt, wenn der Sollwert des Ansteuerstromes ungleich Null ist und einen solchen Wert annimmt, daß sich das bewegliche Bauteil aus seiner Ruhelage in Richtung seiner Endlage in Bewegung setzt, wenn der Ansteuerstrom diesen Sollwert erreicht, und
    - wobei dieser erste Parameter den Wert 0 annimmt, wenn der Sollwert des Ansteuerstromes gleich 0 wird, und
  - wobei der zweite Parameter die Änderungsrichtung des Ansteuerstromes charakterisiert,
    - wobei dieser zweite Parameter den Wert 1 annimmt, wenn der Ansteuerstrom ansteigt, und
    - wobei dieser zweite Parameter den Wert 0 annimmt, wenn der Ansteuerstrom konstant ist oder kleiner wird und
- daß ein Übergang von einem Zustand in einen anderen erfolgt, wenn sich die Werte der Parameter des Parametersatzes entsprechend dem momentanen Bewegungs- und Lagezustand so ändern, daß sich das bewegliche Bauteil in einem Bewegungs- und Lagezustand befindet, der durch den anderen Zustand charakterisiert wird.

2. Verfahren nach Anspruch 1, **dadurch gekennzeichnet,** daß ein dritter Parameter die Leerlaufstellung des beweglichen Bauteiles charakterisiert,
- wobei dieser dritte Parameter den Wert 0 annimmt, wenn der Wert des Ansteuerstromes oberhalb eines Schwellwertes liegt und
- wobei dieser dritte Parameter den Wert 1 annimmt, wenn der Wert des Ansteuerstromes unterhalb des Schwellwertes liegt und
- wobei geschlossen wird, daß sich das bewegliche Bauteil in seiner Ruhelage befindet, wenn der dritte Parameter den Wert 1 annimmt.

3. Verfahren nach einem der Ansprüche 1 oder 2, **dadurch gekennzeichnet,** daß der Bewegungs- und Lagezustand des beweglichen Bauteiles einem Zustand 1 zugeordnet wird, wenn dem induktiven elektrischen Verbraucher ein solcher Sollwert des Ansteuerstromes vorgegeben wird, daß der erste Parameter den Wert 1 annimmt und wenn sich das bewegliche Bauteil noch nicht aus seiner Ruhelage in Bewegung gesetzt hat, was dadurch erkannt wird, daß nach einer Änderung des Sollwertes des Ansteuerstromes von dem Wert 0 auf einen solchen Wert, daß der erste Parameter des Parametersatzes den Wert 1 annimmt, der Ansteuerstrom streng monoton steigend ist.

4. Verfahren nach Anspruch 3, **dadurch gekennzeichnet,** daß eine Änderung des Bewegungs- und Lagezustandes des beweglichen Bauteiles dahin gehend, daß sich das bewegliche Bauteil aus seiner Ruhelage in Richtung seiner Endlage in Bewegung setzt, durch einen Zustand 2 charakterisiert wird, wobei diese Änderung des Bewegungs- und Lagezustandes erkannt wird, wenn der Bewegungs- und Lagezustand momentan durch den Zustand 1 charakterisiert wird und wenn die beiden ersten Parameter des Parametersatzes die Wertekombination (1,0) annehmen, wobei dieser Zeitpunkt mit $t_1$ bezeichnet wird.

5. Verfahren nach Anspruch 4, **dadurch gekennzeichnet,** daß eine Signalfilterung durchgeführt wird, indem bei bleibender Wertekombination (1,0) der beiden ersten Parameter des Parametersatzes ein Aufwärtszählen der Zustände erfolgt und indem bei einer Wertekombination (1,1) der beiden ersten Parameter des Parametersatzes ein Abwärtszählen der Zustände erfolgt bis entweder der Zustand 1 erreicht ist oder ein Zustand mit der Nummer x, die insbesondere 7 sein kann, ab dem sicher geschlossen wird, daß sich das bewegliche Bauteil in Bewegung gesetzt hat.

6. Verfahren nach einem der Ansprüche 3 bis 5, **dadurch gekennzeichnet,** daß das Erreichen der Endlage des beweglichen Bauteiles erkannt wird, wenn der momentane Zustand dem Zustand mit der Nummer x entspricht, indem dann festgestellt wird, daß der Ansteuerstrom wieder steigend ist, so daß die beiden ersten Parameter des Parametersatzes die Wertekombination (1,1) aufweisen, wobei dann der Zustand aufwärts gezählt wird und wobei dieser Zeitpunkt mit $t_2$ bezeichnet wird.

7. Verfahren nach Anspruch 6,
**dadurch gekennzeichnet,**
daß eine Signalfilterung durchgeführt wird, indem bei bleibender Wertekombination (1,1) der beiden ersten Parameter des Parametersatzes ein Aufwärtszählen der Zustände erfolgt und indem bei einer Wertekombination (1,0) der beiden ersten Parameter des Parametersatzes ein Abwärtszählen der Zustände erfolgt bis entweder der Zustand x erreicht ist oder ein Zustand mit der Nummer y, die insbesondere 11 sein kann, ab dem sicher geschlossen wird, daß das bewegliche Bauteil seine Endlage erreicht hat.

8. Verfahren nach einem der Ansprüche 3 bis 7,
**dadurch gekennzeichnet,**
daß der Bewegungs- und Lagezustand des beweglichen Bauteiles mit dem Zustand 1 charakterisiert wird, wenn der erste Parameter des Parametersatzes den Wert 0 annimmt, bevor sicher das Erreichen der Endlage des beweglichen Bauteiles erkannt wurde.

9. Verfahren nach einem der Ansprüche 3 bis 8,
**dadurch gekennzeichnet,**
daß von dem Zustand, der das sichere Erreichen der Endlage des beweglichen Bauteiles zum Zeitpunkt $t_2$ charakterisiert, aufwärts gezählt wird, wenn der Sollwert des Ansteuerstromes gleich 0 wird, wobei dieser Zeitpunkt mit $t_3$ bezeichnet wird.

10. Verfahren nach einem der Ansprüche 3 bis 9,
**dadurch gekennzeichnet,**
daß ausgehend von einem Zustand z, der beschreibt, daß sich das bewegliche Bauteil ab dem Zeitpunkt $t_3$ noch in seiner Endlage befindet und daß der erste Parameter des Parametersatzes den Wert 0 annimmt, der Zustand aufwärts gezählt wird, wenn der zweite Parameter des Parametersatzes den Wert 1 annimmt, wobei dieser Zeitpunkt mit $t_4$ bezeichnet wird.

11. Verfahren nach Anspruch 10,
**dadurch gekennzeichnet,**
daß eine Signalfilterung durchgeführt wird, indem bei bleibender Wertekombination (0,1) der beiden ersten Parameter des Parametersatzes ein Aufwärtszählen der Zustände erfolgt und indem bei einer Wertekombination (0,0) der beiden ersten Parameter des Parametersatzes ein Abwärtszählen der Zustände erfolgt bis entweder der Zustand z erreicht ist oder ein Zustand mit der Nummer u, die insbesondere 14 sein kann, ab dem sicher geschlossen wird, daß das bewegliche Bauteil sich aus der Endlage in Richtung seiner Ruhelage bewegt.

12. Verfahren nach einem der Ansprüche 3 bis 11,
**dadurch gekennzeichnet,**
daß ausgehend von dem Zustand, der den Bewegungs- und Lagezustand charakterisiert, daß das bewegliche Bauteil ab dem Zeitpunkt $t_4$ von der Endlage in Richtung seiner Ruhelage in Bewegung ist, ein Aufwärtszählen des Zustandes erfolgt, wenn die beiden ersten Parameter des Parametersatzes die Wertekombination (0,0) aufweisen, wobei dieser Zeitpunkt mit $t_5$ bezeichnet wird.

13. Verfahren nach Anspruch 12,
**dadurch gekennzeichnet,**
daß eine Signalfilterung durchgeführt wird, indem bei bleibender Wertekombination (0,0) der beiden ersten Parameter des Parametersatzes ein Aufwärtszählen der Zustände erfolgt und indem bei einer Wertekombination (0,1) der beiden ersten Parameter des Parametersatzes ein Abwärtszählen der Zustände erfolgt bis entweder der Zustand u erreicht ist oder ein Zustand mit der Nummer v, die insbesondere 16 sein kann, ab dem sicher geschlossen wird, daß das bewegliche Bauteil seine Ruhelage erreicht hat.

14. Verfahren nach Anspruch 13,
**dadurch gekennzeichnet,**
daß von dem Zustand mit der Nummer v ein Übergang zu dem Zustand mit der Nummer 1 erfolgt, wenn die beiden ersten Parameter des Parametersatzes die Wertekombination (0,0) aufweisen.

15. Verfahren nach einem der Ansprüche 3 bis 14,
**dadurch gekennzeichnet,**
daß der momentane Zustand dem Zustand zugeordnet wird, der charakterisiert, daß das bewegliche Bauteil sicher die Endlage erreicht hat, wenn während der Zeitspanne, während der das bewegliche Bauteil sich in Richtung der Ruhelage bewegt, der erste Parameter den Wert 1 annimmt.

16. Verfahren nach einem der Ansprüche 1 bis 15,
**dadurch gekennzeichnet,**
daß der Ansteuerstrom $I_{Halte}$ zum Halten des beweglichen Bauteiles in der Endlage ab dem Zeitpunkt $t_2$ bezogen wird auf die Größe des zum Zeitpunkt $t_1$ fließenden Ansteuerstromes.

17. Verfahren nach einem der Ansprüche 1 bis 15,
**dadurch gekennzeichnet,**
daß der Ansteuerstrom $I_{Halte}$ zum Halten des beweglichen Bauteiles in der Endlage ab dem Zeitpunkt $t_2$ bezogen wird auf die Größe des zum Zeitpunkt $t_2$ fließenden Ansteuerstromes.

18. Verfahren nach einem der Ansprüche 1 bis 17,

**dadurch gekennzeichnet,**
daß durch eine Bestimmung von den zeitlichen Verlauf des Ansteuerstromes charakterisierenden Konstanten und durch einen Vergleich dieser Konstanten mit vorgegebenen Referenzwerten Betriebsbedingungen oder Funktionsstörungen des induktiven elektrischen Verbrauchers erkannt werden.

19. Verfahren nach Anspruch 18,
**dadurch gekennzeichnet,**
daß die den zeitlichen Verlauf des Ansteuerstromes charakterisierenden Konstanten eine oder mehrere der Konstanten sind:
- die den zeitlichen Abfall zwischen ab dem Zeitpunkt $t_5$ sowie den zeitlichen Anstieg zwischen den Zeitpunkten $t_0$ und $t_1$ charakterisierende Zeitkonstante $t_{aus}$,
- die den zeitlichen Abfall zwischen den Zeitpunkten $t_3$ und $t_4$ sowie den zeitlichen Anstieg zwischen den Zeitpunkten $t_2$ und $t_3$ charakterisierende Zeitkonstante $t_{ein}$,
- eine oder mehrere der Zeitspannen $(t_1-t_0)$, $(t_2-t_1)$, $(t_4-t_3)$, $(t_5-t_4)$ und/oder
- eine oder mehrere der Konstanten $I_{max1}$, $I_{max2}$, $I_{max3}$.

20. Verfahren nach einem der Ansprüche 16 oder 17,
**dadurch gekennzeichnet,**
daß die Einstellung des Ansteuerstromes zum Halten des beweglichen Bauteiles in der Endlage ab dem Zeitpunkt $t_2$ auf den Sollwert frühzeitig erfolgt, indem aus einer Zustandserkennungsvorrichtung (2.2) frühzeitig Tendenzen der Änderungsrichtung des Ansteuerstromes ausgewertet werden.

## Claims

1. Process for detecting the motion and the positional state of a constructional part of an inductive electric consuming device moving by magnetic alternating action between a rest position and an end position, in which process it is established from a combination of the desired value of the triggering current and the temporary derivation of the triggering current whether the movable part of the inductive electric consuming device is in motion, whereby, on a movement of the movable part, the alteration of the direction of alteration of the triggering current is evaluated in dependence upon the desired value of the triggering current, characterized in that
- the overall temporary course of the triggering current of the inductive electric consuming device is divided into several states which characterize the motion and positional state of the movable part,
- a set of parameters from at least two parameters assuming binary values is determined,
- whereby the first parameter characterizes the desired value of the triggering current,
- whereby this first parameter assumes the value 1, when the desired value of the triggering current is dissimilarly nil and assumes such a value that the movable part starts moving from its rest position in the direction of its end position when the triggering current reaches this desired value, and
- whereby this first parameter assumes the value 0 when the desired value of the triggering current is equal to 0, and
- whereby the second parameter characterizes the direction of change of the triggering current,
- whereby this second parameter assumes the value 1 when the triggering current rises, and
- whereby this second parameter assumes the value 0 when the triggering current is constant, or becomes smaller, and
- in that a transition from one stage to another takes place when the values of the parameters of the set of parameters change correspondingly to the momentary motion and position state in such a manner that the movable part is in a motion and position state which is characterized by the other state.

2. Process according to claim 1, characterized in that a third parameter characterizes the idling position of the movable part,
- this third parameter assuming the value 0 when the value of the triggering current lies over a threshold value, and
- this third parameter assuming the value 1 when the value of the triggering current lies below the threshold value, and
- the conclusion being drawn that the movable part is in its rest position when the third parameter assumes the value 1.

3. Process according to either claim 1 or claim 2, characterized in that the motion and positional state of the movable part is associated with a state 1 when there is predetermined for the inductive electric consuming device such a desired value of the triggering current that the first parameter assumes the value 1 and when the movable part has not yet started to move from its rest position, this being recognized from the fact that, after a change of the desired value of the triggering current from value 0 to such a value that the first parameter of the set of parameters assumes the value 0, the triggering current is strictly monotonously increasing.

4. Process according to claim 3, characterized in that an alteration of the motion and position state of the movabLe part, on the assumption that the movable part starts to move from its rest position in the direction of its end position, is characterized by a state 2, this alteration of the motion and position state being recognized when the motion and position state is momentarily characterized by the state 1, and when the first two parameters of the set of parameters assume the value combination (1,0), this point in time being denoted by $t_1$.

5. Process according to claim 4, characterized in that a signal filtering is carried out while, the value combination (1,0) of the first two parameters of the set of parameters subsists, an upward counting of the states takes place, and in that, on a value combination (1, 1) of the first two parameters of the set of parameters a downward counting of the states takes place until either state 1, or a state with number x, which may be in particular 7, from which it is safely concluded that the movable part has started to move.

6. Process according to one of claims 3 to 5, characterized in that the reaching of the end position of the movable part is detected when the momentary state corresponds to the state with number x, while it is then established that the triggering current is again rising, so that the first two parameters of the set of parameters have the values combination (1,1), the state being then upwardly counted and this point in time being denoted by $t_2$.

7. Process according to claim 6, characterized in that a signal filtering is carried out while, the value combination (1, 1) of the first two parameters of the set of parameters subsisting, an upward counting of the states takes place, and in that, on a value combination (1, 0) of the first two parameters of the set of parameters a downward counting of the states takes place till either the state x is reached, or a state with number y, which may be in particular 11, from which it is safely concluded that the movable part has reached its end position.

8. Process according to one of claims 3 to 7, characterized in that the motion and position state of the movable part is characterized by state 1, when the first parameter of the set of parameters assumes the value 0, before the reaching of the end position of the movable part was definitely established.

9. Process according to one of claims 3 to 8, characterized in that from the state which characterizes the definite reaching of the end position of the movable part at time $t_2$, counting upwards is carried out, when the desired value of the triggering current becomes equal to 0, this point in time being denoted by $t_3$.

10. Process according to one of claims 3 to 9, characterized in that, from a state z which denotes that the movable part from the point in time $t_3$ is still in its end position and that the first parameter of the set of parameters assumes the value 0, the state is counted upwards when the second parameter of the set of parameters assumes the value 1, this point in time being denoted by $t_4$.

11. Process according to claim 10, characterized in that a signal filtering is carried out while, the value combination (0, 1) of the first two parameters of the set of parameters subsisting, an upward counting of the states takes place, and in that on a value combination (0,0) of the first two parameters of the set of parameters a downward counting of the states takes place till either the state z is reached, or a state with number u, which may be in particular 14, from which it is safely concluded that the movable part is moving out of the end position in the direction of its rest position.

12. Process according to one of claims 1 to 11, characterized in that, starting from the state which characterizes the motion and position state, that the movable part from the time point $t_4$ is in motion from the end position in the direction of its rest position, an upward counting of the state takes place when the first two parameters of the set of parameters show the value combination (0,0), this point in time being denoted by $t_5$.

13. Process according to claim 12, characterized in that, the combination of values (0,0) of the first two parameters of the set of parameters remaining constant, there takes place an upward counting of the states, and, at a combination of values (0,1) of the first two parameters of the set of parameters, a downward counting of the states takes place until either the state u is reached, or a state with the number v which may be in particular 16, from which it may be safely concluded that the movable part has reached its rest position.

**14.** Process according to claim 13, characterized in that from the state with number v a transition takes place to the state with number 1 when the first two parameters of the set of parameters have the value combination (0,0).

**15.** Process according to one of claims 3 to 14, characterized in that the momentary state is associated with the state which characterizes that the movable part has definitely reached the end position if, during the time interval during which the movable part moves in the direction of the rest position, the first parameter assumes the value 1.

**16.** Process according to one of claims 1 to 15, characterized in that the triggering current $I_{Halte}$ for stopping the movable part in the end position is related from time $t_2$ to the magnitude of the triggering current flowing at time $t_1$.

**17.** Process according to one of claims 1 to 15, characterized in that the triggering current $I_{Halte}$ for stopping the movable part in the end position is related from time $t_2$ to the magnitude of the triggering current flowing at time $t_2$.

**18.** Process according to one of claims 1 to 17, characterized in that, by means of a determination of constants characterizing the time course of the triggering current, and by means of a comparison of these constants with predetermined reference values, operational conditions or functional breakdowns of the inductive electric consumer device are detected.

**19.** Process according to claim 18, characterized in that the constants characterizing the time course of the triggering current are one or more of the following constants:-
  - the time constant $t_{out}$ characterizing the time decrease from time $t_5$ as well as the time rise between times $t_0$ and $t_1$,
  - the time constant $t_{in}$ characterizing the time decrease between times $t_3$ and $t_4$ as well as the time rise between times $t_2$ and $t_3$,
  - one or more of the time intervals $(t_1-t_0)$, $(t_2-t_1)$, $(t_4-t_3)$, $(t_5-t_4)$ and/or
  - one or more of the constants $I_{max1}$, $I_{max2}$, $I_{max3}$.

**20.** Process according to either claim 16 or 17, characterized in that the setting of the triggering current for stopping the movable part in the end position from time $t_2$ to the desired value takes place prematurely, in that, from a state recognition device (2,2) tendencies of the direction of change of the triggering current are evaluated.

**Revendications**

**1.** Procédé de détection de l'état de mouvement et de repos d'un composant d'un appareil électrique inductif qu'un effet magnétique alterné déplace entre une position de repos et une position finale,

procédé dans lequel, à partir d'une combinaison de la valeur prescrite de l'intensité d'excitation et de la dérivée, en fonction du temps, de l'intensité d'excitation, il est décidé si le composant mobile de l'appareil électrique inductif est en mouvement, et dans lequel, en cas de déplacement du composant mobile, le changement de sens de la modification de l'intensité d'excitation est traité en fonction de la valeur prescrite de l'intensité d'excitation,

procédé caractérisé

- par le fait que la courbe totale donnant l'allure, en fonction du temps, de l'intensité d'excitation de l'appareil électrique inductif est divisée en plusieurs états qui caractérisent l'état de mouvement et de repos du composant mobile,
- par le fait qu'un jeu de paramètres est constitué d'au moins deux paramètres prenant des valeurs binaires,
  - étant précisé que le premier paramètre caractérise la valeur prescrite de l'intensité d'excitation,
    - étant précisé que ce premier paramètre prend la valeur 1 lorsque la valeur prescrite de l'intensité d'excitation est différente de zéro et qu'elle prend une valeur telle que le composant mobile se met en mouvement, depuis sa position de repos, en direction de sa position finale, lorsque l'intensité d'excitation atteint cette valeur prescrite, et
    - étant précisé que ce premier paramètre prend la valeur 0 lorsque la valeur prescrite de l'intensité d'excitation est égale à 0, et
  - étant précisé que le second paramètre caractérise le sens de la modification de l'intensité d'excitation,
    - étant précisé que ce second paramètre prend la valeur 1 lorsque l'intensité d'excitation croît et
    - étant précisé que ce second paramètre prend la valeur 0 lorsque le courant d'excitation est constant ou décroît et
- par le fait qu'il se produit un passage d'un état dans un autre lorsque les valeurs des paramètres du jeu de paramètres se modifient, en fonction de l'état momentané de mouvement et de repos de façon telle que le composant mobile se trouve dans un état de mouvement et de repos qui est caractérisé par l'autre état.

2. Procédé selon la revendication 1, caractérisé

par le fait qu'un troisième paramètre caractérise la situation de marche à vide du composant mobile,

- étant précisé que ce troisième paramètre prend la valeur 0 lorsque la valeur d'intensité d'excitation se situe au-dessus d'une valeur de seuil et

- étant précisé que ce troisième paramètre prend la valeur 1 lorsque la valeur de l'intensité d'excitation se situe au-dessous de la valeur de seuil et

- étant précisé que, lorsque le troisième paramètre prend la valeur 1, il en est conclu que le composant mobile se trouve dans sa position de repos.

3. Procédé selon l'une des revendications 1 ou 2, caractérisé

par le fait que l'état de mouvement et de repos du composant mobile correspond à un état 1 lorsque l'appareil électrique inductif est fournie une valeur prescrite de l'intensité d'excitation telle que le premier paramètre prend la valeur 1 et que le composant mobile ne s'est pas encore mis en mouvement à partir de sa position de repos, ce qui est détecté par le fait qu'après une modification de la valeur prescrite de l'intensité d'excitation pour passer de la valeur 0 à une valeur telle que le premier paramètre du jeu de paramètres prend la valeur 1, l'intensité d'excitation est croissante de façon strictement monotone.

4. Procédé selon la revendication 3, caractérisé

par le fait qu'une modification de l'état de mouvement et de repos du composant mobile dans le sens que le composant mobile se met en mouvement, depuis sa position de repos, en direction de sa position finale, est caractérisée par un état 2, étant précisé que cette modification de l'état du mouvement et de repos est détectée lorsque l'état de mouvement et de repos est momentanément caractérisé par l'état 1 et que les deux premiers paramètres du jeu de paramètres prennent la combinaison de valeurs (1,0), cet instant étant désigné par $t_1$.

5. Procédé selon la revendication 4, caractérisé

par le fait qu'il est procédé à un filtrage des signaux en ce sens qu'en présence d'une combinaison (1,0) des valeurs des deux premiers paramètres du jeu de paramètres qui subsiste, il se fait un comptage des états par valeur croissante et qu'en présence d'une combinaison (1,1) des valeurs des deux premiers paramètres du jeu de paramètres, il se fait un comptage des états par valeur décroissante jusqu'à ce que l'on atteigne soit l'état 1 soit un état de numéro x, qui peut en particulier être 7, à partir duquel on peut conclure de façon certaine que le composant mobile s'est mis en mouvement.

6. Procédé selon l'une des revendications 3 à 5, caractérisé

en ce que le fait que la position finale du composant mobile est atteinte est détecté lorsque l'état momentané correspond à l'état de numéro x, en ce sens que l'on établit alors que l'intensité d'excitation est toujours croissante, de sorte que les deux premiers paramètres du jeu de paramètres présentent la combinaison de valeurs (1,1), étant précisé qu'alors l'état est compté par valeur croissante et que cet instant est désigné par $t_2$.

7. Procédé selon la revendication 6 caractérisé

par le fait qu'il est procédé à un filtrage des signaux en ce sens qu'en présence d'une combinaison (1,1) des valeurs des deux premiers paramètres du jeu de paramètres qui subsiste, il se fait un comptage des états par valeur croissante et qu'en présence d'une combinaison (1,0) des valeurs des deux premiers paramètres du jeu de paramètres, il se fait un comptage des états par valeur décroissante jusqu'à ce que l'on atteigne soit l'état x soit un état de numéro y, qui peut en particulier être 11, à partir duquel on peut conclure de façon certaine que le composant mobile a atteint sa position finale.

8. Procédé selon l'une des revendications 3 à 7, caractérisé

par le fait que l'état de mouvement et de repos du composant mobile est caractérisé par l'état 1 lorsque le premier paramètre du jeu de paramètres prend la valeur zéro avant que le fait que le composant mobile a atteint sa position finale soit détecté de façon certaine.

9. Procédé selon l'une des revendications 3 à 8, caractérisé

en ce que, à partir de l'état qui caractérise le fait que la position finale du composant mobile a été atteinte de façon certaine à l'instant $t_2$, le comptage se fait par valeur croissante lorsque la valeur prescrite de l'intensité d'excitation est égale à 0, cet instant étant désigné par $t_3$.

10. Procédé selon l'une des revendications 3 à 9, caractérisé

par le fait qu'à partir d'un état z, qui décrit que le composant mobile se trouve encore dans sa position finale à partir de l'instant $t_3$ et que le premier paramètre du jeu de paramètres prend la valeur 0, le comptage de l'état se fait par valeur croissante lorsque le second paramètre du jeu de paramètres prend la valeur 1, cet instant étant désigné par $t_4$.

**11.** Procédé selon la revendication 10
   caractérisé
   par le fait qu'il est procédé à un filtrage des signaux en ce sens qu'en présence d'une combinaison (0,1) des valeurs des deux premiers paramètres du jeu de paramètres qui subsiste, il se fait un comptage des états par valeur croissante et qu'en présence d'une combinaison (0,0) des valeurs des deux premiers paramètres du jeu de paramètres, il se fait un comptage des états par valeur décroissante jusqu'à ce que l'on atteigne soit l'état z soit un état de numéro u, qui peut en particulier être 14, à partir duquel on peut conclure de façon certaine que le composant mobile se déplace, depuis sa position finale, en direction de sa position de repos.

**12.** Procédé selon l'une des revendications 3 à 11,
   caractérisé
   en ce qu'en partant de l'état qui caractérise l'état de mouvement et de repos, soit le fait que le composant mobile, à partir de l'instant $t_4$, se met en mouvement, depuis sa position finale, en direction de sa position de repos, le comptage de l'état se fait par valeur croissante lorsque les deux premiers paramètres du jeu de paramètres présentent la combinaison de valeurs (0,0), cet instant étant désigné par $t_5$.

**13.** Procédé selon la revendication 12,
   caractérisé
   par le fait qu'il est procédé à un filtrage des signaux en ce sens qu'en présence d'une combinaison (0,0) des valeurs des deux premiers paramètres du jeu de paramètres qui subsiste, il se fait un comptage des états par valeur croissante et qu'en présence d'une combinaison (0,1) des valeurs des deux premiers paramètres du jeu de paramètres, il se fait un comptage des états par valeur décroissante jusqu'à ce que l'on atteigne soit l'état u soit un état de numéro v, qui peut en particulier être 16, à partir duquel on peut conclure de façon certaine que le composant mobile a atteint sa position de repos.

**14.** Procédé selon la revendication 13,
   caractérisé
   par le fait qu'à partir de l'état de numéro v, il se fait un passage à l'état de numéro 1 lorsque les deux premiers paramètres du jeu de paramètres présentent la combinaison de valeurs (0,0).

**15.** Procédé selon l'une des revendications 3 à 14,
   caractérisé
   en ce que l'état momentané correspond à l'état qui caractérise le fait que le composant mobile a atteint de façon certaine sa position finale, lorsque, pendant l'intervalle de temps pendant lequel le composant mobile s'est mis en mouvement en direction de sa position de repos, le premier paramètre prend la valeur 1.

**16.** Procédé selon l'une des revendications 1 à 15,
   caractérisé
   par le fait que l'intensité d'excitation $I_{maintien}$ pour maintenir le composant mobile dans sa position finale à partir de l'instant $t_2$ est rapportée à la valeur de l'intensité d'excitation qui passe à l'instant $t_1$.

**17.** Procédé selon l'une des revendications 1 à 15,
   caractérisé
   par le fait que l'intensité d'excitation $I_{maintien}$ pour maintenir le composant mobile dans sa position finale à partir de l'instant $t_2$ est rapportée à la valeur de l'intensité d'excitation qui passe à l'instant $t_2$.

**18.** Procédé selon l'une des revendications 1 à 17,
   caractérisé
   par le fait qu'en déterminant les constantes qui caractérisent l'allure, en fonction du temps, de l'intensité d'excitation et qu'en comparant ces constantes avec des valeurs de référence prédéterminées, on détecte les conditions d'exploitation ou les incidents de fonctionnement de l'appareil électrique inductif.

**19.** Procédé selon la revendication 18,
   caractérisé
   par le fait que les constantes qui caractérisent l'allure, en fonction du temps, de l'intensité d'excitation sont une ou plusieurs des constantes suivantes:
   - la constante de temps $t_{aus}$, qui caractérise la décroissance en fonction du temps à partir de l'instant $t_5$ ainsi que la croissance en fonction du temps entre les instants $t_0$ et $t_1$,
   - la constante de temps $t_{ein}$ qui caractérise la décroissance, en fonction du temps, entre les instants $t_3$ et $t_4$ ainsi que la croissance, en fonction du temps, entre les instants $t_2$ et $t_3$,
   - un ou plusieurs des intervalles de temps $(t_1-t_0)$, $(t_2-t_1)$, $(t_4-t_3)$, $(t_5-t_4)$ et/ou
   - une ou plusieurs des constantes $I_{max1}$, $I_{max2}$, $I_{max3}$.

20. Procédé selon l'une des revendications 16 ou 17, caractérisé,

par le fait que le réglage de l'intensité d'excitation pour maintenir le composant mobile dans sa position finale à partir de l'instant $t_2$ se fait précocement sur la valeur prescrite du fait qu'à partir d'un dispositif (2.2) de détection de l'état on évalue précocement les tendances du sens de la modification de l'intensité d'excitation.

# Fig. 1

i(t)

$I_{max2}$
$I_{max1}$

$I_{max3}$

Zustände

1      2-6 | 7      11      11a

12-13
14
15-16   1

$t_0$     $t_1$    $t_2$   8-10     $t_3$    $t_4$   $t_5$     t

Anzugszeit

Abfallz.

Einschaltdauer

Rücklaufzeit

Hubz.

# Fig. 2

2.1

Clock
$f_{CLK}$

2.4    2.5

2.5.1

2.1.1.1    2.1.1.3    D Q   U/D

2.1.1    2.1.2   2.1.2.1   2.1.3    2.2   2.2.1   2.3

2.1.1.2    2.1.4

Fig. 3

EP 0 438 640 B1

Fig. 4